(19) Europäisches Patentamt / European Patent Office / Office européen des brevets

(11) **EP 3 484 813 B1**

(12) **EUROPEAN PATENT SPECIFICATION**

(45) Date of publication and mention
of the grant of the patent:
**15.04.2020 Bulletin 2020/16**

(21) Application number: **17754811.2**

(22) Date of filing: **17.07.2017**

(51) Int Cl.:
***C01B 17/04*** (2006.01)      ***B01D 53/52*** (2006.01)
***B01D 53/86*** (2006.01)      ***B01J 8/02*** (2006.01)

(86) International application number:
**PCT/NL2017/050481**

(87) International publication number:
**WO 2018/012979 (18.01.2018 Gazette 2018/03)**

(54) **SELECTIVE OXIDATION OF HYDROGEN SULFIDE**

SELEKTIVE OXIDATION VON SCHWEFELWASSERSTOFF

OXYDATION SÉLECTIVE DE SULFURE D'HYDROGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2016 NL 2017178**

(43) Date of publication of application:
**22.05.2019 Bulletin 2019/21**

(73) Proprietor: **Worley Nederland B.V.**
**2595 AN 's-Gravenhage (NL)**

(72) Inventors:
• **KOBUSSEN, Sander**
**2595 AN ' s-Gravenhage (NL)**

• **VAN WARNERS, Anne**
**2595 AN ' s-Gravenhage (NL)**
• **ROELOFS, Tobias**
**2595 AN ' s-Gravenhage (NL)**

(74) Representative: **V.O.**
**P.O. Box 87930**
**Carnegieplein 5**
**2508 DH Den Haag (NL)**

(56) References cited:
**CA-A1- 2 736 115      GB-A- 1 476 394**
**US-A- 4 836 999**

**Description**

The invention is in the field of selective oxidation of sulfur-containing compounds, in particular of hydrogen sulfide. The invention is in particular directed to processes and apparatuses suitable for oxidizing hydrogen sulfide entrained in tail gas streams of a sulfur recovery unit, such as a Claus plant.

Sulfur recovery units are employed to remove sulfur-containing compounds, in particular hydrogen sulfide ($H_2S$), from gas streams such as natural gas and to produce elemental sulfur. For gas streams comprising high amounts of hydrogen sulfide (*e.g.* 10 vol% or more), the Claus process is the most common desulfurizing process. However, the conversion of $H_2S$ in the Claus process is not complete and tail gas treatment processes are required to reduce the amounts of $H_2S$ and $SO_2$ in the tail gas of the Claus process before the tail gas can be discharged into the atmosphere.

Known methods to treat the tail gas of sulfur recovery units include the low-temperature Claus method, the reduction-absorption method and the selective oxidation method. GB1476394A discloses a process for removing hydrogen sulfide from gaseous effluents and controlling the amount of hydrogen sulfide and sulfur dioxide by an colorimetric titrating process.

US4836999A discloses a method for controlling the flow of oxygen feed to a Claus furnace by measuring the composition of the gaseous feed and of the effluent. In US2010/226483, treatment of tail gas of a Claus process by a low-temperature Claus reaction (*i.e.* the Claus reaction includes the reaction of 2 $H_2S$ with 1 $SO_2$ to form sulfur and water) is described. The analyzer downstream the low-temperature Claus reactor is used to maintain the same optimum $H_2S/SO_2$ ratio of 2 for maximum conversion as in a Claus process.

In US2006/0014292, controlling a Claus catalytic reaction apparatus is described. The Claus catalytic process comprises a thermal step and a catalytic step following the thermal step. The controlling is carried out by controlling the amount of oxygen by analyzing the process gas composition between the beginning of the thermal and the end of the catalytic step as well as analyzing the composition downstream of the end of the catalytic step. The tail gas of this Claus catalytic reaction can be treated with a SUPERCLAUS™ process, which comprises selective oxidation of $H_2S$.

The selective oxidation method is particularly suitable for the tail gas treatments since, in contrast to the Claus process, the reaction is thermodynamically complete meaning that a theoretical full conversion of $H_2S$ to elemental sulfur is possible.

The selective oxidation of $H_2S$ with oxygen over a catalyst to form elemental sulfur and water is reviewed by Zhang et al. (ACS Catalysis 2015, 5, 1053-1067). Moreover, the selective oxidation process and particularly suitable catalysts therefore are described in EP0409353 and EP0242920.

The selective oxidation of $H_2S$ by oxygen to elemental sulfur is believed to proceed according the following reaction:

$$2 \ H_2S + O_2 \rightarrow 2 \ H_2O + \tfrac{1}{4} \ S_8 \qquad (1)$$

However, the selective oxidation to form elemental sulfur may be adversely affected by the occurrence of one or more of the following side reactions:

Over oxidation of $H_2S$:

$$2 \ H_2S + 3 \ O_2 \rightarrow 2 \ H_2O + 2 \ SO_2 \qquad (2)$$

Oxidation of $S_8$:

$$1/8 \ S_8 + O_2 \rightarrow 2H_2O + SO_2 \qquad (3)$$

The formation of $SO_2$ is undesirable and the side reactions are preferably suppressed to maximize the yield of elemental sulfur. Conventionally, the selective oxidation of $H_2S$ is typically optimized by controlling the amount of $H_2S$ input in the reactor wherein the selective oxidation is carried out, and the amount of oxygen input is invariably coupled to the amount of $H_2S$ input. For instance, the concentration $H_2S$ in the input stream is commonly maintained at about 0.3 to 1.5 vol% while the molar ratio of oxygen to $H_2S$ is maintained at higher than 0.5, such as about 1. Typically an excess of oxygen is maintained to avoid damage to the catalyst, as a lack of oxygen will result in a change of the active phase of the catalyst. Conventionally, the amount of oxygen input is thus typically not controlled independently from the $H_2S$ input.

However, it has now been found that during operation, and in particular during starting up and shutting down of the selective oxidation process or of the process of which the tail gas is processed, the preferred amount of oxygen input may change to obtain an optimal yield of elemental sulfur. Likewise, other process parameters such as the reaction temperature may also influence the effectiveness of the selective oxidation.

To further improve the process for selective oxidation of hydrogen sulfide, it is desirable to provide a reliable feedback parameter which can be used to control the process parameters. The present inventors have found that the amount of residual hydrogen sulfide provides such a feedback parameter. Surprisingly, although the selective oxidation processes are capable of fully converting the input the hydrogen sulfide, it has been found that an improved yield of elemental sulfur is obtained when the output stream of the selective oxidation process comprises a certain amount of residual hydrogen sulfide present in the output gas stream.

The present invention is accordingly directed to a process for the selective oxidation of hydrogen sulfide, said process comprising passing an input gas stream comprising the hydrogen sulfide together with oxygen over a catalyst bed to produce elemental sulfur and an output gas stream, said process further comprising determining the amount of residual hydrogen sulfide in the output gas stream to control at least one process parameter.

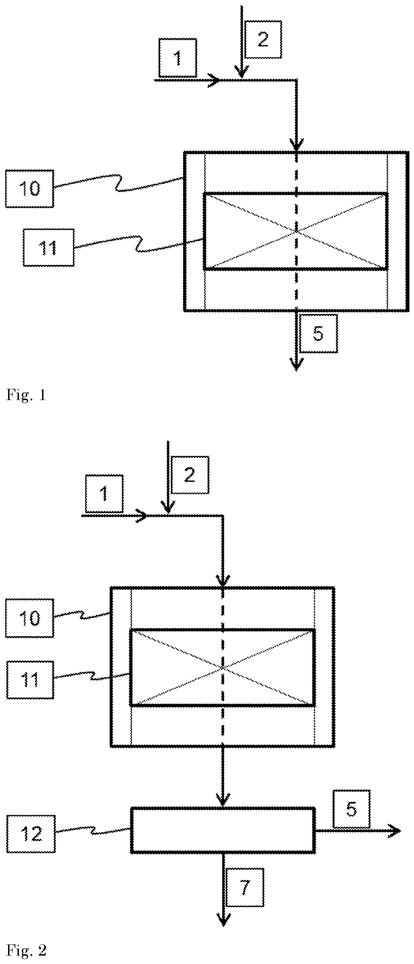

In figure 1, a particular embodiment of the process of the present invention is illustrated. The input gas stream (1) comprising the hydrogen sulfide together with oxygen (2) is passed over the catalyst bed (11) that is placed in a reactor (10) to produce elemental sulfur and an output gas stream (5) comprising water, residual hydrogen sulfide and optionally $SO_2$. The amount of residual hydrogen sulfide can be determined from the output gas stream (5) that directly exits the reactor.

In a preferred embodiment, as illustrated in figure 2, the amount of residual hydrogen sulfide is determined from the output gas stream (5) after it has passed through a condenser module (12) wherein the elemental sulfur is condensed and a stream of elemental sulfur (7) is formed.

It was found that the optimal yield of the process may be obtained if the amount of residual hydrogen sulfide in the output gas stream is higher than 0.

The yield of the present process is the degree of elemental sulfur production and is equal to the degree of $H_2S$ conversion corrected for the formation of $SO_2$. Accordingly, the yield can be defined as

$$yield = \frac{[\mathrm{H_2S}_{in}] - [\mathrm{H_2S}_{out}] + [\mathrm{SO}_{2,in}] - [\mathrm{SO}_{2,out}]}{[\mathrm{H_2S}_{in}]} \times 100\% \qquad (4)$$

Using the amount of residual hydrogen in the output gas stream to control at least one process parameter is beneficial, as it theoretically allows the determination of the yield according to formula 4. However, the use of $SO_2$ to determine elemental sulfur yield is in practice not preferred since the formation of $SO_2$ may also be the result of oxidizing sulfur-containing compounds other than $H_2S$. Additionally, the $SO_2$ present in the input gas stream in practice is not always stable. Upstream process conditions fluctuate and have a pronounced effect on the $SO_2$ concentration in the input gas stream. The amount of $SO_{2,out}$ therefore typically does not provide the required reliability. The present inventors found that it may not be required to determine the amount of $SO_2$ in the input and/or output gas streams to improve the yield and that merely determining the amount of residual hydrogen sulfide in the output gas stream generally suffices.

The input gas stream originates from a tail gas stream from a Claus process. The tail gas stream may be treated before entering the present process as the input gas stream. For instance, the tail gas stream may intermediately be diluted or concentrated or purified from certain gasses. In certain embodiments, the tail gas stream may be directly entering the present process as the input gas stream without undergoing an intermediate treatment such that the input stream comprises a tail gas stream from a Claus process as such.

A Claus process generally comprises multiple reactor stages, for instance two or three reactor stages. A tail gas stream originating from a Claus process based on two or three reactor stages is preferred since such a tail gas stream comprises a favorable concentration of hydrogen sulfide of about 0.3 to 1.5 vol%. The concentration of $H_2S$ in the tail gas stream is typically controlled using a gas analyzer module upstream of the selective oxidation reactor stage. The present invention may also be applied to input gas streams comprising another concentration of hydrogen sulfide than 0.3 to 1.5 vol%, e.g. between 0.1 to 5 vol%. It is preferred that the input gas stream comprises between 0.3 and 1.0 vol% hydrogen sulfide.

It was surprisingly found that the best yield of elemental sulfur is obtained at incomplete conversion of the $H_2S$, *viz.* if a certain amount of residual hydrogen sulfide remains and the amount is not zero. In case the concentration of hydrogen sulfide in the input gas stream is in between about 0.3 to 1.5 vol%, the amount of residual hydrogen sulfide in the output gas stream is preferably between 50 and 500 parts per million by volume (ppmv), more preferably between 100 and 200 ppmv. This results in an excellent yield of elemental sulfur.

Typically, it is preferred that the amount of residual hydrogen sulfide is in the range of 0.1% to 5%, preferably 0.1% to 1%, with respect to the amount of hydrogen sulfide in the input gas stream. The residual hydrogen sulfide can at least partially be separated from output gas stream and recycled in the Claus process and/or in the present process. Alternatively or additionally, the output gas stream can be treated in a downstream process such as gas scrubbing.

An excellent yield of the process may be maintained if the amount of residual hydrogen sulfide is maintained in the above described range. Depending on the amount of residual hydrogen sulfide detected in the output gas stream, one or more process parameters can be controlled (*i.e.* maintained or adjusted if required). The process parameter that can be controlled preferably includes at least one process parameter selected from the group consisting of the inlet temperature of the catalyst bed, the average temperature of the catalyst bed, the molar ratio of oxygen to hydrogen sulfide and a combination thereof.

The selective oxidation reaction is an exothermal reaction and, if the concentration $H_2S$ in the input stream is lower than 1.5 vol%, the process is generally carried out in an adiabatically operating reactor. However, it may be preferred to actively cool the catalyst bed in case the amount of residual hydrogen sulfide detected in the output gas stream is too low (*i.e.* below the above described preferred range for the amount of residual hydrogen sulfide detected in the output gas stream). The catalyst bed can for instance be cooled by providing the bed in a tube that is surrounded by a coolant that can flow around the catalyst bed to transport generated heat. Alternatively or additionally, if the amount of sulfur-containing compound is too low, the inlet temperature of the catalyst bed can be lowered.

In case the amount of residual hydrogen sulfide detected in the output gas stream is too high (*i.e.* above the above-described preferred range for the amount of residual hydrogen sulfide detected in the output gas stream), the average temperature of the catalyst bed and/or the inlet temperature of the catalyst bed can be actively increased. The average temperature of the catalyst bed is typically between 160 and 300 °C. The inlet temperature of the catalyst bed is typically above 150 °C.

Another process parameter that can be controlled based on the amount of residual hydrogen sulfide, is the molar ratio of oxygen to hydrogen sulfide at the inlet of the catalyst bed. Typically, the input gas stream comprising the hydrogen sulfide is contacted with an oxygen-containing gas stream before entering the reactor. Alternatively, the input gas stream and the oxygen-containing gas stream may be led separately into the reactor such that both gas streams are contacted first at the inlet of the catalyst bed. In any case, the amount of oxygen passing over the catalyst bed may preferably be independently adaptable with respect to the amount of hydrogen sulfide in the input gas stream. The molar ratio of oxygen to the hydrogen sulfide is typically between 0.5 and 5.0 and preferably between 0.6 and 1.5. The molar ratio should not be too low to prevent unnecessary limited conversion and should not be too high to prevent over-oxidation of the hydrogen sulfide and/or oxidation of $S_8$.

The oxygen-containing gas stream that is contacted with the input gas stream and/or led into the reactor generally does not comprise pure oxygen but is diluted with nitrogen and/or other gasses. Preferably, the oxygen-containing gas stream comprises air which is mixed with input gas stream prior to entry into the reactor. The molar ratio oxygen to the hydrogen sulfide can be adjusted by adjusting the flow rate of the oxygen-containing gas stream and/or the amount of oxygen in the oxygen-containing gas stream. For simplicity of the process, it is preferred to adjust the flow rate of the oxygen-containing gas stream in case the molar ratio requires adjustment.

In general, when the amount of residual hydrogen sulfide is too low, less oxygen with respect to the amount of the hydrogen sulfide in the inlet is preferably supplied to the catalyst bed since this typically indicates over oxidation of the hydrogen sulfide and/or oxidation of $S_8$. On the other hand, if the amount of residual hydrogen sulfide is too high, the molar ratio oxygen to sulfur in the sulfur containing compounds is preferably increased.

The molar ratio of oxygen to the hydrogen sulfide is a preferred parameter to be controlled by using the amount of residual hydrogen sulfide since the adjustment of the ratio typically has a rapid effect on the process outcome. Adjusting the temperature of the catalyst bed and/or its inlet is generally slower and the time before this adjustment influences the process is accordingly longer.

It may also be possible to use the amount of residual hydrogen sulfide in adjusting both the oxygen to hydrogen sulfide molar ratio and the temperature of the catalyst bed and/or its inlet. Such an embodiment is particularly suitable to compensate a slow adjustment of the temperature with a rapid adjustment of the oxygen to hydrogen sulfide molar ratio. During the increase or decrease of the temperature, the deviation of the molar ratio of oxygen to hydrogen sulfide may decrease.

In general, any known catalyst for the selective oxidation of sulfur-containing compound may suffer from the side reactions as discussed above. Accordingly, the present invention may be applied to the selective oxidation, irrespective of the type of catalyst used. Particularly preferred catalyst beds are those comprising active materials such as carbon and/or metal-oxide. Zhang et al. (ACS Catalysis 2015, 5, 1053-1067) describe a number of catalysts that are applicable in the selective oxidation and may thus also be applied for the present invention.

The catalysts described in EP0409353 and EP0242920 comprise iron compounds (*e.g.* iron oxide) or a mixture of iron compounds with other metal species as active species and these catalysts are most preferred. The catalyst further preferably comprises a carrier material comprising silica, alumina or a combination thereof.

A further aspect of the present invention is an apparatus for the selective oxidation of hydrogen sulfide comprising a catalyst bed and a gas analyzing module located downstream of the catalyst bed. The apparatus typically further comprises a condenser module for condensing the product elemental sulfur. The condenser module comprises an inlet, a gas outlet and a liquid sulfur outlet.

The gas analyzing module is preferably directly connected to the catalyst bed and the outlet of the condenser module. Alternatively, the gas analyzing module is directly connected to the gas inlet of the condenser module.

The catalyst bed preferably comprises an inlet having a temperature control module. This temperature control module is preferably controllably connected to the gas analyzing module such that the output of the gas analyzing module can be used to control the temperature control module.

The apparatus further preferably comprises a gas flow control module located upstream of the catalyst bed, said gas flow control module being adapted for controlling the amount of oxygen. The gas flow control module is also preferably controllably connected to the gas analyzing module.

In a preferred embodiment, the amount of oxygen in the output gas stream originating from the selective oxidation process is determined and controlled. The amount of oxygen in the flow from the selective oxidation process may for instance be maintained at about 0.5 vol%. Such an oxygen content may be preferred to retain sufficient oxygen in the output gas stream to maintain a sufficiently high conversion rate of the oxidation reaction. The amount of oxygen can be determined by analytical measurements or preferably by a calculation based on the known flow rates and oxygen input. Based on the determined oxygen amount, the oxygen input can be adapted by the gas flow control module to allow more or less oxygen to enter the catalyst bed (*e.g.* by increasing the flow rate of the oxygen-containing gas stream).

The apparatus is preferably positioned downstream of a sulfur recovery unit, in particular a Claus plant, most preferably downstream a two-stage or three-stage reactor Claus plant.

The invention may be illustrated with the following examples.

**Example 1**

An inlet stream comprising 1 vol% $H_2S$, 0.1 vol% $SO_2$, 30 vol% $H_2O$ together with oxygen in a molar ratio of 2:1 oxygen to $H_2S$ was passed over a catalyst bed comprising a 5 wt% iron oxide on silica catalyst. The amount of residual hydrogen sulfur (slip) in the outlet stream was used to influence the inlet temperature in order to optimize the yield of sulfur. The results are provided in Table 1.

**Table 1**

| Inlet Temperature (°C) | $H_2S$ Slip (ppmv, dry) | Yield of Sulfur (%) |
|---|---|---|
| 225 | 956 | 89.6 |
| 235 | 295 | 93.3 |
| 245 | 86 | 93.9 |
| 260 | 22 | 91.4 |

**Example 2**

30% of the inlet stream of Example 1 is passed over the catalyst bed of Example 1, simulating turndown operation. The amount of residual hydrogen sulfur (slip) in the outlet stream is used to influence the inlet temperature in order to optimize the yield of sulfur. The results are provided in Table 2. The optimum temperature has decreased from close to 245 °C in Example 1 to close to 235 °C in Example 2.

**Table 2**

| Inlet Temperature (°C) | $H_2S$ Slip (ppmv, dry) | Yield of Sulfur (%) |
|---|---|---|
| 225 | 590 | 88.8 |
| 235 | 20 | 93.7 |
| 251 | 10 | 87.7 |
| 261 | 10 | 81.8 |

**Claims**

1. Process for the selective oxidation of hydrogen sulfide, said process comprising passing an input gas stream that originates from a tail gas stream of a Claus process comprising the hydrogen sulfide, together with oxygen over a catalyst bed to produce elemental sulfur and an output gas stream, said process further comprising determining the amount of residual hydrogen sulfide in the output gas stream to control at least one process parameter and wherein the amount of residual hydrogen sulfide in the output stream is maintained at between 50 ppmv and 500 ppmv.

2. Process according to claim 1, wherein the amount of residual hydrogen sulfide in the output stream is used to control at least one process parameter selected from the group consisting of the inlet temperature of the catalyst bed, the average temperature of the catalyst bed and the molar ratio of oxygen to hydrogen sulfide or a combination thereof.

3. Process according to claim 1, wherein the amount of residual hydrogen sulfide in the output stream is used to control both a slow responding process parameter (*e.g.* the inlet temperature of the catalyst bed) and a rapid responding process parameter (*e.g.* molar ratio of oxygen to hydrogen sulfide).

4. Process according to any of the previous claims, wherein the amount of residual hydrogen sulfide in the output stream is maintained between 100 and 200 ppmv.

5. Process according to any of the previous claims, wherein the average temperature of the catalyst bed is maintained between 160 and 300 °C.

6. Process according to any of the previous claims, wherein the inlet temperature of the catalyst bed is maintained above 150 °C.

7. Process according to any of the previous claims, wherein the molar ratio of oxygen to the hydrogen sulfide is maintained at 0.5 to 1.5.

8. Process according to any of the previous claims, further comprising determining the amount of hydrogen sulfide in the input gas stream to control at least one process parameter.

9. Process according to any of the previous claims, wherein the input gas stream comprises between 0.1 to 2.5 vol%, preferably between 0.5 and 1.5 vol% hydrogen sulfide.

10. Apparatus for the selective oxidation of hydrogen sulfide comprising a catalyst bed and a gas analyzing module located downstream of the catalyst bed, and a gas flow control module located upstream of the catalyst bed, wherein said gas flow control module is adapted for controlling the amount of an oxygen-containing gas stream.

11. Apparatus according to claim 10, wherein the catalyst bed comprises an input having a temperature control module.

12. Apparatus according to any of claims 10 to 11, positioned downstream of a sulfur recovery unit, in particular a Claus plant.

13. Apparatus according to any of claim 10 to 12, wherein the catalyst bed comprises a carbon- or metal-oxide-based catalyst, preferably a catalyst comprising iron compounds on a silica support.

**Patentansprüche**

1. Verfahren für die selektive Oxidation von Schwefelwasserstoff, das Verfahren umfassend Leiten eines Eingangsgasstroms, der aus einem Endgasstrom eines Claus-Verfahrens, umfassend den Schwefelwasserstoff, stammt, zusammen mit Sauerstoff über ein Katalysatorbett, um elementaren Schwefel und einen Ausgangsgasstroms zu erzeugen, das Verfahren ferner umfassend Bestimmen der Menge an restlichem Schwefelwasserstoff in dem Ausgangsgasstrom, um wenigstens einen Verfahrensparameter zu kontrollieren, und wobei die Menge an restlichem Schwefelwasserstoff in dem Ausgangsstrom bei zwischen 50 ppmv und 500 ppmv gehalten wird.

2. Verfahren nach Anspruch 1, wobei die Menge an restlichem Schwefelwasserstoff in dem Ausgangsstrom verwendet wird, um wenigstens einen Verfahrensparameter, ausgewählt aus der Gruppe , bestehend aus der Einlasstemperatur des Katalysatorbetts, der Durchschnittstemperatur des Katalysatorbetts und des Molverhältnisses von Sauerstoff zu Schwefelwasserstoff oder einer Kombination davon, zu kontrollieren.

3. Verfahren nach Anspruch 1, wobei die Menge an restlichem Schwefelwasserstoff in dem Ausgangsstrom verwendet wird, um sowohl einen langsam ansprechenden Verfahrensparameter (*z. B.* die Einlasstemperatur des Katalysatorbetts) als auch einen schnell ansprechenden Verfahrensparameter (*z. B.* Molverhältnis von Sauerstoff zu Schwefelwasserstoff) zu kontrollieren.

4. Verfahren nach einem der vorhergehenden Ansprüche, wobei die Menge an restlichem Schwefelwasserstoff im Ausgangsstrom zwischen 100 und 200 ppmv gehalten wird.

5. Verfahren nach einem der vorhergehenden Ansprüche, wobei die Durchschnittstemperatur des Katalysatorbetts zwischen 160 und 300 °C gehalten wird.

6. Verfahren nach einem der vorhergehenden Ansprüche, wobei die Einlasstemperatur des Katalysatorbetts über 150 °C gehalten wird.

7. Verfahren nach einem der vorhergehenden Ansprüche, wobei das Molverhältnis von Sauerstoff zu dem Schwefelwasserstoff bei 0,5 bis 1,5 gehalten wird.

8. Verfahren nach einem der vorhergehenden Ansprüche, ferner umfassend Bestimmen der Menge an Schwefelwasserstoff in dem Eingangsgasstrom, um wenigstens einen Verfahrensparameter zu kontrollieren.

9. Verfahren nach einem der vorhergehenden Ansprüche, wobei der Eingangsgasstrom zwischen 0,1 bis 2,5 Vol.-%, vorzugsweise zwischen 0,5 und 1,5 Vol.-% Schwefelwasserstoff umfasst.

10. Vorrichtung für die selektive Oxidation von Schwefelwasserstoff, umfassend ein Katalysatorbett und ein Gasanalysemodul, angeordnet stromabwärts des Katalysatorbetts, und ein Gasströmungskontrollmodul, angeordnet stromaufwärts des Katalysatorbetts, wobei das Gasströmungskontrollmodul zum Kontrollieren der Menge eines sauerstoffhaltigen Gasstroms angepasst ist.

11. Vorrichtung nach Anspruch 10, wobei das Katalysatorbett einen Eingang mit einem Temperaturkontrollmodul umfasst.

12. Vorrichtung nach einem der Ansprüche 10 bis 11, positioniert stromabwärts einer Schwefelrückgewinnungseinheit, insbesondere einer Claus-Anlage.

13. Vorrichtung nach einem der Ansprüche 10 bis 12, wobei das Katalysatorbett einen Kohlenstoff- oder Metalloxidbasierenden Katalysator umfasst, vorzugsweise einen Katalysator, umfassend Eisenverbindungen auf einem Siliciumdioxidträger.

**Revendications**

1. Procédé pour l'oxydation sélective de sulfure d'hydrogène, ledit procédé comprenant le fait de faire passer un courant de gaz entrant qui provient d'un courant de gaz de queue d'un procédé Claus comprenant le sulfure d'hydrogène, conjointement avec de l'oxygène sur un lit de catalyseur pour produire du soufre élémentaire et un courant de gaz sortant, ledit procédé comprenant en outre le fait de déterminer la quantité de sulfure d'hydrogène résiduel dans le courant de gaz sortant pour régler au moins un paramètre de processus et dans lequel la quantité de sulfure d'hydrogène résiduel dans le courant sortant est maintenue entre 50 ppmv et 500 ppmv.

2. Procédé selon la revendication 1, dans lequel on utilise la quantité de sulfure d'hydrogène résiduel dans le courant sortant pour régler au moins un paramètre de processus choisi dans l'ensemble constitué par la température à l'entrée du lit de catalyseur, la température moyenne du lit de catalyseur et le rapport molaire de l'oxygène au sulfure d'hydrogène ou une combinaison de tels paramètres.

3. Procédé selon la revendication 1, dans lequel on utilise la quantité de sulfure d'hydrogène résiduel dans le courant sortant pour régler à la fois un paramètre de processus répondant lentement (par exemple la température à l'entrée du lit de catalyseur) et un paramètre de processus répondant rapidement (par exemple le rapport molaire de l'oxygène au sulfure d'hydrogène).

4. Procédé selon l'une quelconque des revendications précédentes, dans lequel la quantité de sulfure d'hydrogène résiduel dans le courant sortant est maintenue entre 100 et 200 ppmv.

**5.** Procédé selon l'une quelconque des revendications précédentes, dans lequel la température moyenne du lit de catalyseur est maintenue entre 160 et 300 °C.

**6.** Procédé selon l'une quelconque des revendications précédentes, dans lequel la température à l'entrée du lit de catalyseur est maintenue au-dessus de 150 °C.

**7.** Procédé selon l'une quelconque des revendications précédentes, dans lequel le rapport molaire de l'oxygène au sulfure d'hydrogène est maintenu à une valeur de 0,5 à 1,5.

**8.** Procédé selon l'une quelconque des revendications précédentes, comprenant en outre le fait de déterminer la quantité de sulfure d'hydrogène dans le courant de gaz entrant pour régler au moins un paramètre de processus.

**9.** Procédé selon l'une quelconque des revendications précédentes, dans lequel le courant de gaz entrant comprend entre 0,1 et 2,5 % en volume, de préférence entre 0,5 et 1,5 % en volume de sulfure d'hydrogène.

**10.** Appareil pour l'oxydation sélective de sulfure d'hydrogène, comprenant un lit de catalyseur et un module analysant le gaz, disposé en aval du lit de catalyseur, et un module de réglage du flux de gaz disposé en amont du lit de catalyseur, dans lequel ledit module de réglage du flux de gaz est adapté pour régler la quantité d'un courant de gaz contenant de l'oxygène.

**11.** Appareil selon la revendication 10, dans lequel le lit de catalyseur comprend une entrée comportant un module de réglage de la température.

**12.** Appareil selon l'une quelconque des revendications 10 et 11, positionné en aval d'une unité de récupération de soufre, en particulier une unité Claus.

**13.** Appareil selon l'une quelconque des revendications 10 à 12, dans lequel le lit de catalyseur comprend un catalyseur à base d'oxyde métallique ou de carbone, de préférence un catalyseur comprenant des composés à base de fer sur un support en silice.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1476394 A
- US 4836999 A
- US 2010226483 A
- US 20060014292 A
- EP 0409353 A
- EP 0242920 A

### Non-patent literature cited in the description

- **ZHANG et al.** *ACS Catalysis,* 2015, vol. 5, 1053-1067